# EUROPÄISCHE PATENTSCHRIFT

(11) **EP 0 593 934 B1**
(45) Veröffentlichungstag und Bekanntmachung des Hinweises auf die Patenterteilung: **24.04.1996**
(21) Anmeldenummer: 93115405.8
(22) Anmeldetag: 24.09.1993
(51) Int. Cl.: F16M 13/02

(54) **Haltevorrichtung für ein elektrisches Gerät**
Holding device for an electrical apparatus
Dispositif de fixation pour un appareil électrique

(30) Priorität: 17.10.1992 DE 4235041
(43) Veröffentlichungstag der Anmeldung: 27.04.1994
(73) Patentinhaber: ROBERT BOSCH GMBH, D-70442 Stuttgart (DE)
(72) Erfinder: Dürbeck, Horst Peter, D-14197 Berlin (DE); Birkl, Gérard-Emile, Dipl.-Ing., D-12053 Berlin (DE); Krajewski, Andreas, D-13589 Berlin (DE)

(56) Entgegenhaltungen:
- DE-A- 4 107 996
- DE-U- 8 901 019
- GB-A- 2 225 606
- GB-A- 2 251 415
- US-A- 5 038 253

## Beschreibung

Die Erfindung geht von einer Haltevorrichtung nach dem Oberbegriff des Anspruchs 1 aus.

Es ist eine Haltevorrichtung bekannt (DE-GM 89 01 019), die ein elektrisches Gerät voraussetzt, das an Zwei gegenüberliegenden Stirnseiten eine Nut aufweist, in die ein leistenförmiger Vorsprung und eine federnde Klinke der Haltevorrichtung eingreifen. Bei der bekannten Haltevorrichtung muß das elektrische Gerät erst schräg auf den leistenförmigen Vorsprung gesteckt und dann abgesenkt werden, bis die federnde Klinke in die entsprechende Nut des elektrischen Gerätes einrastet.

Der Erfindung liegt die Aufgabe zugrunde, die Haltevorrichtung derart weiterzubilden, daß das Befestigen des elektrischen Gerätes, das ist vorzugsweise ein quaderförmiges Funkgerät, für den Benutzer vereinfacht wird.

Diese Aufgabe wird durch die in dem Anspruch 1 angegebenen Merkmale gelöst. Mit der Haltevorrichtung ist der Vorteil verbunden, daß das elektrische Gerät lediglich auf die Haltevorrichtung gelegt zu werden braucht und anschließend ein Hebel geschwenkt werden muß. Ein Einfädeln des elektrischen Gerätes ist somit nicht erforderlich. In einer bevorzugten Ausführung der erfindungsgemäßen Haltevorrichtung weist diese an dem dem Gleitschieber gegenüberliegenden Ende einen abgewinkelten Geräteteil auf, der einen Klemmechanismus zum lösbaren Festhalten einer auf dem elektrischen Gerät abgelegten Vorrichtung enthält. Ist das elektrische Gerät ein Funktelefon mit einem Basisteil und einem Handapparat, dann wird der auf dem Basisteil abgelegte Handapparat beim Einschieben des Basisteils in die Haltevorrichtung durch den Klemmechanismus festgehalten. Weitere vorteilhafte Ausgestaltungen der Erfindung ergeben sich aus den anderen Unteransprüchen.

In der Zeichnung ist die Erfindung anhand mehrerer Figuren dargestellt und wird im folgenden näher erläutert. Es zeigen
Fig. 1 eine Draufsicht auf die Haltevorrichtung,
Fig. 2 eine Seitenansicht zu Fig. 1, teilweise im Schnitt,
Fig. 3 eine Draufsicht der Haltevorrichtung nach Fig. 1 mit aufgelegtem elektrischen Gerät,
Fig. 4 eine Seitenansicht zu Fig. 3,
Fig. 5 eine Draufsicht der Haltevorrichtung bei in Arbeitsstellung befindlichem Schwenkhebel,
Fig. 6 eine Seitenansicht zu Fig. 5 mit durch die Haltevorrichtung festgehaltenem Basisteil und Handapparat eines Funktelefons und
Fig. 7 eine schematische Darstellung des auf der Haltevorrichtung festgeklemmten elektrischen Gerätes.

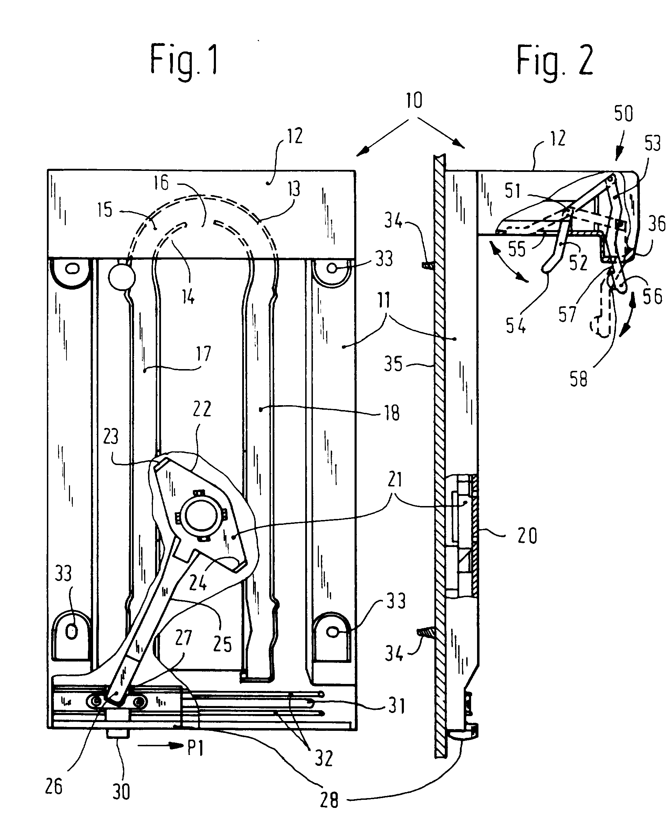

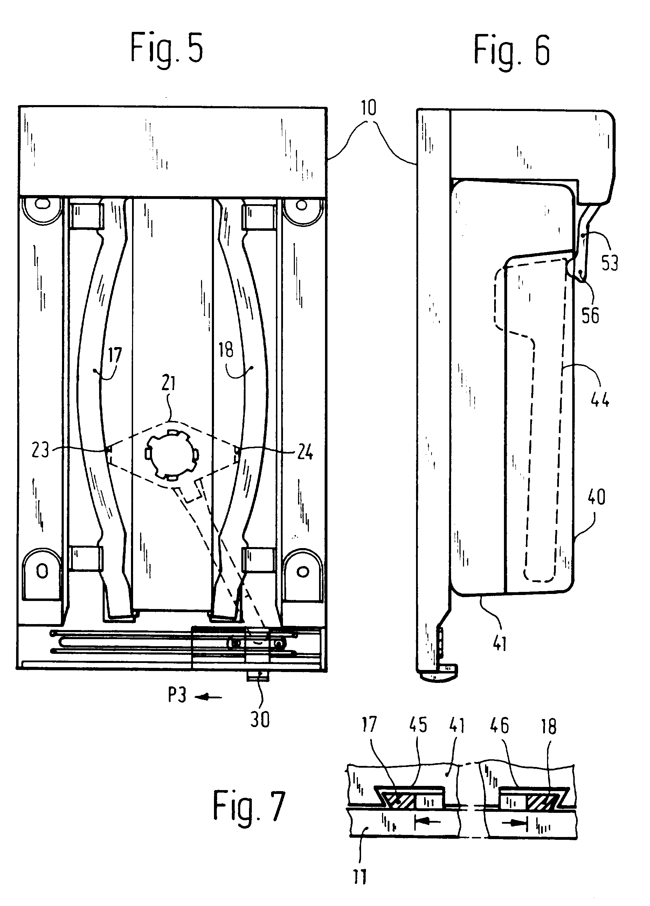

In den Fig. 1 und 2 bedeutet 10 eine L-förmige Haltevorrichtung für ein quaderförmiges elektrisches Gerät, das ist vorzugsweise ein Funktelefon, welches in einem Fahrzeug lösbar, jedoch rüttelsicher befestigt werden muß. Die Haltevorrichtung 10 weist ein flaches, kastenförmiges, unten offenes Unterteil 11 auf, das an einem Ende in einen abgewinkelten Teil 12 übergeht. Zwei einen Abstand voneinander aufweisende U-förmige Schlitze 13, 14 im Unterteil 11 geben ein U-förmiges Druckstück 15 frei. In einem Bereich 16 am halbkreisförmigen Teil des Schlitzes 14 ist dieser unterbrochen, so daß das Druckstück 15 an dieser Stelle mit dem Unterteil 11 verbunden ist. Die parallelen Schenkel 17, 18 des Druckstücks 15 sind infolge der Schlitze 13, 14 etwas quer zur Längsrichtung der Haltevorrichtung 10 bewegbar. Sie stehen außerdem über der Oberfläche der Wand 20 hervor und greifen in entsprechende parallele Nuten 45, 46 (Fig. 7) an der Unterseite des auf dem Unterteil 11 ruhenden elektrischen Gerätes 40 ein. Die Schenkel 17, 18 und die Nuten 45, 46 haben einen schwalbenschwanzförmigen Querschnitt.

Ein in der Wand des Unterteils 11 schwenkbar gelagerter flacher Rasthebel 21 weist ein zweiarmiges Klemmteil 22 mit Abflachungen 23, 24 an den Enden und mit einem Hebelarm 25 auf, dessen freies Ende 26 in einer Ausnehmung 27 eines Gleitschiebers 28 beweglich gelagert ist. Der Gleitschieber 28 trägt einen Ansatz 30, der durch einen Längsschlitz des Unterteils 20 nach außen ragt. Der Gleitschieber 28 wird durch einen Führungsschlitz 31 und zwei dazu parallele Führungsrippen 32 in der Gehäusewand geführt. Vier Löcher 33 sind für Schrauben 34 vorgesehen, die in entsprechende Löcher einer Wand 35 eingeschraubt sind. Die Schrauben 34 sind vorzugsweise selbstschneidend.

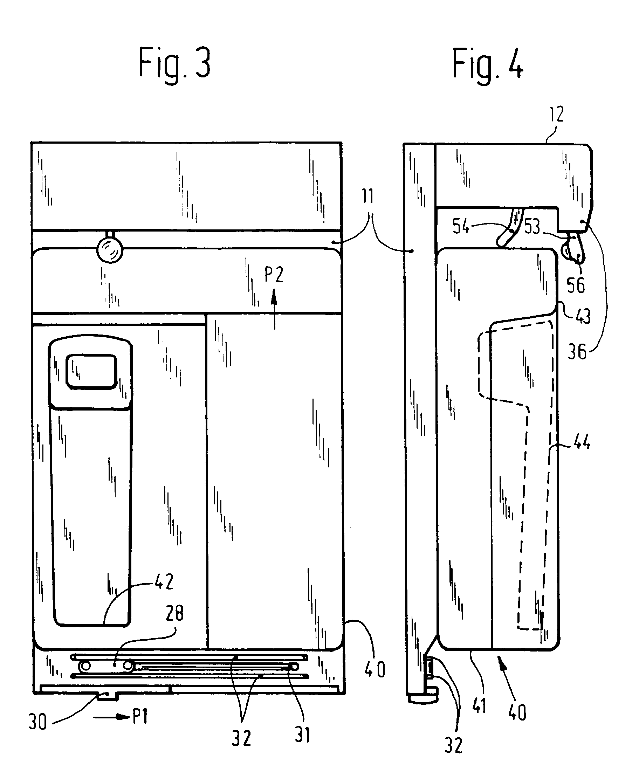

Das mit der Haltevorrichtung 10 lösbar zu befestigende Funktelefon 40 (vgl. Fig. 3 und 4) besteht aus einem quaderförmigen Basisteil 41 mit einer Mulde 42 an der Oberseite 43 und einen Handapparat 44 (Fig. 4), der in die Mulde 42 gelegt werden kann.

Der abgewinkelte Teil 12 der Haltevorrichtung 10 ist als Hohlkörper ausgebildet und enthält, wie in Fig. 2 gezeigt, einen Klemmechanismus 50, der aus einem zweiarmigen, um eine Welle 51 schwenkbaren Schwenkhebel 52 und einem mit dem Schwenkhebel 52 schwenkbar verbundenen Klemmhebel 53 besteht. Ein freies Ende 54 des Schwenkhebels 52 ragt aus einer ersten Öffnung 55 und der Klemmhebel 53 min seinem freien Ende 56 aus einer zweiten Öffnung 57 hervor. Das freie Ende 56 des Klemmhebels 53 weist auf seiner dem Unterteil 11 zugewandten Seite ein Klemmstück 58 auf, das vorzugsweise ballig ausgebildet ist.

Die Wirkungsweise der vorstehend beschriebenen Haltevorrichtung ist folgende.

Auf die mit den Schrauben 34 an der Wand 35 befestigte Haltevorrichtung 10 wird das Basisteil 41 des zu befestigenden Funktelefons 40 gelegt, wobei die parallelen Schenkel 17, 18 (Fig. 1 und 5) in die parallelen Nuten 45, 46 des Basisteils 41 eingreifen. Die Klemmvorrichtung 50 (Fig. 2) nimmt dabei ihre Grundstellung - vgl. ausgezogene Linien in Fig. 2 - ein, in welcher das freie Ende 54 des Schwenkhebels 52 aus der ersten Öffnung 55 hervorsteht. Wird dann das Funktelefon in Pfeilrichtung P2 (Fig. 3) geschoben, so bewegt es mit seiner vorderen Stirnseite den Schwenkhebel 52 in die in Fig. 2 gestrichelt angedeutete Lage, wobei sich der Klemmhebel 53 weiter aus der zweiten Öffnung 57 hervorschiebt und in der Endstellung die in Fig. 6 gezeigte zweite Lage einnimmt, in der das freie Ende 56 des Klemmhebels 53 den Handapparat 44 in die Mulde 42 (Fig. 3) des Basisteils 41 drückt, so daß er auch bei Erschütterungen festgehalten wird.

Gleichzeitig gelangt das Basisteil 41 des Funktelefons 40 unter den vorstehenden Teil 36 des abgewinkelten Teils 12 (vgl. Fig. 4). Anschließend wird der Ansatz 30 des Gleitschiebers 28 in Pfeilrichtung P1 geschoben, bis er die in Fig. 5 gezeigte Klemmstellung einnimmt. Dabei wird der Hebelarm 25 derart geschwenkt, daß die Abflachungen 23 des Klemmhebels 22 die parallelen Schenkel 17, 18 der Haltevorrichtung 10 nach außen drücken, und zwar so weit, bis das Klemmteil 22 in eine Lage schnappt, in welcher die Abflachungen etwa parallel zu den Schenkeln 17 und 18 stehen. Dadurch wird eine Raststellung gebildet, in welcher das Basisteil 41 des Funktelefons 40 auf dem Unterteil 11 festgeklemmt ist; vgl. Fig. 5 und 7.

Zum Öffnen der Haltevorrichtung 10 wird der Ansatz 30 (Fig. 5) solange in Pfeilrichtung P3 bewegt, bis er wieder die in Fig. 1 gezeigte Lage einnimmt. Dann kann das Funktelefon 40 bequem aus der Haltevorrichtung 10 herausgezogen werden, weil der Klemmhebel 53 infolge seiner Elastizität etwas nachgibt. Ein in der Zeichnung nicht dargestelltes Federelement in dem abgewinkelten Teil 12 sorgt dafür, daß die Klemmvorrichtung 50 in die in Fig. 2 durch ausgezogene Linien dargestellte Grundstellung zurückkehrt.

## Patentansprüche

1. Haltevorrichtung für ein an einer Wand zu befestigendes elektrisches Gerät, wobei die Haltevorrichtung ein Unterteil mit bewegbaren Haltemitteln aufweist, **dadurch gekennzeichnet**, daß die Haltemittel aus einem manuell schwenkbaren Rasthebel (21) und zwei parallelen Schenkeln (17, 18) eines elastischen Druckstücks (15) bestehen, daß die Schenkel (17, 18) in parallele Nuten (45, 46) an der Unterseite des elektrischen Gerätes (40) eingreifen und daß ein Klemmteil (22) des Rasthebels (21) bei in die Klemmstellung geschwenktem Rasthebel (21) die Schenkel (17, 18) auseinanderdrückt.

2. Haltevorrichtung nach Anspruch 1, dadurch gekennzeichnet, daß das elastische Druckstück (15) Bestandteil des Unterteils (11) der aus einem Kunststoff bestehenden Haltevorrichtung (10) ist.

3. Haltevorrichtung nach Anspruch 1 oder 2, dadurch gekennzeichnet, daß der Rasthebel (21) aus dem Klemmteil (22) und einem damit verbundenen Hebelarm (25) besteht, dessen freies Ende (26) in einem Gleitschieber (28) gelagert ist, der in Führungsmitteln (31) des Unterteils (11) von einer Grundstellung in eine Klemmstellung und umgekehrt verschiebbar ist.

4. Haltevorrichtung nach einem der Ansprüche 1 bis 3, dadurch gekennzeichnet, daß das Klemmteil (22) an gegenüberliegenden Seiten je eine Abflachung (23, 24) aufweist, die in Verbindung mit den parallelen Schenkeln (17, 18) des Druckstücks (15) ein Rastmittel bildet.

5. Haltevorrichtung nach einem der Ansprüche 3 oder 4, dadurch gekennzeichnet, daß die Haltevorrichtung (10) an dem dem Gleitschieber (28) gegenüberliegenden Ende einen abgewinkelten Teil (12) aufweist, der einen Klemmechanismus (50) zum lösbaren Festhalten einer auf dem elektrischen Gerät (40) abgelegten Vorrichtung (44) enthält.

6. Haltevorrichtung nach Anspruch 5, dadurch gekennzeichnet, daß der Klemmechanismus (50) aus einem zweiarmigen Schwenkhebel (52) und einem damit schwenkbar verbundenen Klemmhebel (53) besteht.

## Claims

1. Holding device for an electrical apparatus which is to be mounted on a wall, the holding device having a lower part with movable holding means, characterized in that the holding means comprise a manually pivotable latching lever (21) and two parallel limbs (17, 18) of an elastic pressure piece (15), in that the limbs (17, 18) engage in parallel grooves (45, 46) on the bottom side of the electrical apparatus (40), and in that a clamping part (22) of the latching lever (21) presses the limbs (17, 18) apart when the latching lever (21) is pivoted into the clamping position.

2. Holding device according to Claim 1, characterized in that the elastic pressure piece (15) is a constituent part of the lower part (11) of the holding device (10) which is made of plastic.

3. Holding device according to Claim 1 or 2, characterized in that the latching lever (21) comprises the clamping part (22) and a lever arm (25) which is connected thereto and whose free end (26) is mounted in a slider (28) which can be displaced in guide means (31) of the lower part (11) from a basic position into a clamping position and vice versa.

4. Holding device according to one of Claims 1 to 3, characterized in that the clamping part (22) has on opposite sides in each case a flat section (23, 24) which, in conjunction with the parallel limbs (17, 18) of the pressure piece (15), forms a latching means.

5. Holding device according to one of Claims 3 or 4, characterized in that the holding device (10) has at that end opposite the slider (28) an angled-off part (12) which contains a clamping mechanism (50) for releasably securing a device (44) which is deposited on the electrical apparatus (40).

6. Holding device according to Claim 5, characterized in that the clamping mechanism (50) comprises a two-arm pivoting lever (52) and a clamping lever (53) pivotably connected thereto.

## Revendications

1. Dispositif de fixation pour un appareil électrique devant être fixé sur une paroi, ce dispositif de fixation comportant une partie inférieure avec des moyens de fixation mobiles, dispositif caractérisé en ce que les moyens de fixation sont constitués par un levier d'enclenchement (21) susceptible d'être déplacé en rotation manuellement, et par deux branches parallèles (17, 18) d'une pièce de pression élastique (15), en ce que ces branches (17, 18) viennent en prise dans des gorges parallèles (45, 46) sur le côté inférieur de l'appareil électrique (40), et en ce qu'une partie de serrage (22) du levier d'enclenchement (21) pousse les branches (17, 18) en les écartant l'une de l'autre lorsque le levier d'enclenchement (21) est amené en rotation dans la position de serrage.

2. Dispositif de fixation selon la revendication 1, caractérisé en ce que la pièce de pression élastique (15) est une partie constitutive de la partie inférieure (11) du dispositif de fixation (10) constitué d'une matière synthétique.

3. Dispositif de fixation selon la revendication 1 ou 2, caractérisé en ce que le levier d'enclenchement (21) est constitué par la partie de serrage (22) et par un bras de levier (25) assemblé avec elle, dont l'extrémité libre (26) est montée dans un curseur (28) susceptible d'être déplacé, dans les moyens de guidage (31) de la partie inférieure (11), d'une position de base vers une position de serrage et inversement.

4. Dispositif de fixation selon l'une des revendications 1 à 3, caractérisé en ce que la partie de serrage (22) comporte, sur ses côtés opposés, respectivement un aplatissement (23, 24) qui, en combinaison avec les branches parallèles (17, 18) de la pièce de pression (15), forme un moyen d'enclenchement.

5. Dispositif de fixation selon l'une des revendications 3 ou 4, caractérisé en ce que ce dispositif de fixation (10) comporte, à son extrémité opposée au curseur (28), une partie coudée (12) qui comprend un mécanisme de serrage (50) pour fixer de façon amovible un dispositif (44) déposé sur l'appareil électrique (40).

6. Dispositif de fixation selon la revendication 5, caractérisé en ce que le mécanisme de serrage (50) est constitué par un levier oscillant à deux bras (52) et par un levier de serrage (53) articulé avec lui.
